(19) Europäisches Patentamt
European Patent Office
Office européen des brevets

(11) **EP 2 934 171 B1**

(12) **EUROPEAN PATENT SPECIFICATION**

(45) Date of publication and mention of the grant of the patent:
**10.05.2017 Bulletin 2017/19**

(51) Int Cl.:
*A23G 9/42* (2006.01)  *A23G 9/38* (2006.01)
*A23G 9/32* (2006.01)  *A23G 9/46* (2006.01)

(21) Application number: **13799513.0**

(22) Date of filing: **29.11.2013**

(86) International application number:
**PCT/EP2013/075125**

(87) International publication number:
**WO 2014/095307 (26.06.2014 Gazette 2014/26)**

(54) **FROZEN AERATED CONFECTIONARY AND ITS MANUFACTURING PROCESS**

GEFRORENE, MIT LUFT DURCHSETZTE SÜSSWAREN UND HERSTELLUNGSVERFAHREN DAFÜR

CONFISERIE AÉRÉE CONGELÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2012 EP 12198388**

(43) Date of publication of application:
**28.10.2015 Bulletin 2015/44**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **BRAMLEY, Allan, Sidney**
**Bedford**
**Bedfordshire MK44 1LQ (GB)**
• **MARINOV, George Simeonov**
**Bedford**
**Bedfordshire MK44 1LQ (GB)**
• **MITCHELL, John Turner**
**Bedford**
**Bedfordshire MK44 1LQ (GB)**
• **WILLIAMS, Andrea**
**Bedford**
**Bedfordshire MK44 1LQ (GB)**
• **WILLIAMSON, Ann-Marie**
**Bedford**
**Bedfordshire MK44 1LQ (GB)**
• **YAKUBOV, Gleb**
**Kettering**
**Northamptonshire NN15 7HG (GB)**

(74) Representative: **Keenan, Robert Daniel**
**Unilever PLC**
**Unilever Patent Group**
**Colworth House**
**Sharnbrook**
**Bedford, Bedfordshire MK44 1LQ (GB)**

(56) References cited:
**EP-A1- 1 584 241    EP-A1- 1 800 543
WO-A1-01/06865    US-A- 3 479 187
US-A- 5 482 728    US-A- 6 093 438**

**Description**

**Technical Field of the Invention**

The present invention relates to a manufacturing process to provide frozen aerated confectionaries and to frozen aerated confectionaries.

**Background**

Frozen aerated confectionaries, such as ice cream, are well known and are typically consumed as a dessert or snack.

A typical process to manufacture frozen aerated confectionaries includes dosing and mixing of the ingredients, pasteurization and homogenisation, ageing, freezing and hardening.

Since typically consumed as a treat, consumers desire the frozen confectionary to have good sensorial properties (a.k.a. organoleptic properties).

EP 1 584 241 A1 discloses a frozen confection stated to be preserving its smoothness and exhibiting reduced ice crystal growth after being exposed to heat shock treatment, comprising fat, sweetener, milk solids-not-fat and water, in which an emulsifier is used comprising propylenglycol monoester of fatty acid and process for manufacturing such a frozen confection.

Romanchik et. al. 'Sensory evaluation ratings and melting characteristics show that okra gum is an acceptable milk-fat ingredient substitute in chocolate frozen dairy dessert' (2006; vol. 106, pp. 594-597) disclose that okra gum is an acceptable fat-ingredient substitute which provides many acceptable sensory qualities as compared to chocolate frozen dairy dessert containing milk fat. A procedure is disclosed for preparing chocolate frozen dairy dessert comprising okra gum using common kitchen equipment which includes bowls, wooden spoons and wire whisks.

Although making ice cream at home is a popular activity, home-made frozen confectionary is of poor quality and/or stability. To achieve aerated frozen confectionaries of good quality, it is critical to ensure that the ice crystals and gas bubbles have a fine microstructure and that a sufficient overrun (i.e. level of aeration) is achieved. This leads to high quality frozen aerated confectionary, such as ice cream, having a smooth texture and good meltdown properties.

A fine microstructure and good overrun can be achieved by use of specialized equipment, such as a scraped-surface heat exchanger (SSHE), which is typically used in industrial-scale ice cream manufacturing to provide high quality ice cream.

A SSHE (a typical factory freezer) allows the ingoing fluid ice cream mix to be frozen in thin layers, which are continuously scraped by one or more dashers. The dashers may have an open or closed structure. The SSHE allows simultaneous mixing, aeration and freezing of the mixture and is capable of exerting a shear stress on the mixture which exceeds that of home-made ice cream processes. Furthermore, industrial ice cream manufacturing equipment, such as an SSHE allows the whipping in of air under pressure which allows high aeration levels (i.e. overrun) of the ice cream to be achieved. The result is that by use of specialized equipment, such as an SSHE, which is capable of exerted high shear, a high quality frozen confectionary can be obtained having a fine microstructure and sufficient overrun.

It was found that when okra is added as ingredient in a standard process to provide high quality frozen aerated confectionaries, little or no effect on the organoleptic quality is observed.

It is an object of the present invention to provide high quality frozen aerated confectionaries having improved organoleptic properties, such as an improved smoothness, an improved oiliness, an improved mouth-coating, a reduced iciness, a reduced coldness or any combination thereof.

**Summary of the invention**

It was surprisingly found that one or more of said objects is achieved by first providing a high quality frozen aerated confectionary and then mixing in an ingredient having a Trouton ratio of at least 75. The resulting mixture is the frozen aerated confectionary according to the invention which shows improved organoleptic properties, while maintaining a fine microstructure and good overrun. For example an improved smoothness, oiliness and mouth-coating and a reduced iciness and coldness was observed.

Without wishing to be bound by theory, it is believed that the improvement in organoleptic qualities imparted by the ingredient having a Trouton ratio of at least 75 are due to certain polymer and/or network structures. Subjecting said ingredient to high-shear conditions, such as those typically found in standard (industrial) processes to manufacture high quality frozen aerated confectionaries is believed to negatively affect those structures.

A high quality frozen aerated confectionary is characterized by having a fine microstructure of the ice crystals and/or gas bubbles and good overrun. A frozen aerated confectionary having an overrun of at least 15 volume percent (vol. %), and wherein the number average length of the ice crystals is at most 100 micrometer ($\mu$m) is considered of

high quality.

Accordingly in a first aspect, the invention relates to a process for the manufacture of an frozen aerated confectionary with an overrun of at least 15 vol. % and wherein the number average length of the ice crystals is at most 100 $\mu$m, comprising the following steps:

a) providing a frozen aerated confectionary with an overrun of at least 15 vol. % and wherein the number average length of the ice crystals is at most 100 $\mu$m comprising

- 40 to 85 wt. % of water;
- 0.1 to 30 wt. % of fat;
- 5 to 45 wt. % of freezing point depressant and bulk filler; and
- 0.1 to 7 wt. % of protein;

b) providing an ingredient having a Trouton ratio of at least 75, as measured in a 0.2 wt. % solution of said ingredient in water as measured at 20 degrees Celsius; wherein the ingredient is provided in an amount of 0.001 to 10 wt. %, based on the weight of the final composition;

c) mixing said frozen confectionary provided at step 'a' with the ingredient provided at step 'b' to provide a frozen aerated confectionary according to the invention.

It was found that the resulting frozen aerated confectionary according to the invention provided at step 'c' showed improved organoleptic properties compared to the confectionary provided at step 'a'. Said confectionery according to the invention can be characterized by having an increased Trouton ratio in the melted product.

The melted (i.e. liquid) frozen confectionary according to the invention has a higher Trouton ratio than that of the frozen aerated confectionary provided at step 'a' (i.e. a standard high quality ice cream). In particular, the melted frozen confectionary according to the invention has a Trouton ratio of at least 40.

Accordingly, in a second aspect the invention relates to a frozen aerated confectionery with an overrun of at least 15 vol. % and wherein the number average length of the ice crystals is at most 100 $\mu$m, comprising

- 40 to 85 wt. % of water;
- 0.1 to 30 wt. % of fat;
- 5 to 45 wt. % of freezing point depressant and bulk filler;
- 0.1 to 7 wt. % of protein; and
- 0.001 to 10 wt. % of an ingredient having a Trouton ratio of at least 75, as measured in a 0.2 wt. % solution of said ingredient in water as measured at 20 degrees Celsius;

wherein the Trouton ratio of the degassed melted confectionary as measured at 20 degrees Celsius is at least 40.

### Detailed description of the invention

Weight percentage (wt. %) is based on the total weight of the composition unless otherwise stated. The terms 'fat' and 'oil' are used interchangeably. The terms 'micrometer' and '$\mu$m' are used interchangeably. The terms 'degrees Celsius' and '°C' are used interchangeably.

Providing a frozen aerated confectionary at step 'a'

Standard manufacturing techniques to provide frozen aerated confectionaries of high quality are well known. Frozen confection ingredients are typically mixed, subjected to homogenisation and pasteurisation, chilled to approximately 4 degrees Celsius and held in an ageing tank for some time, such as approximately 2 hours or more. The aged mix is then typically passed through a scraped surface heat exchanger (SSHE). Gas is typically introduced into the SSHE, in some cases under pressure to improve overrun. The action of the dasher within the freezer barrel acts both to mix and aerate the frozen confection mix. The gas can be any gas but is preferably, particularly in the context of food products, a food-grade gas such as air, nitrogen or carbon dioxide. The extent of aeration can be measured in terms of the volume of the aerated product. The extent of aeration is typically defined in terms of "overrun". In the context of the present invention, % overrun is defined in volume terms as:

$$\text{overrun (vol. \%)} = \frac{\text{density of mix - density of ice confection}}{\text{density of ice confection}} \times 100 \ .$$

The amount of overrun present in frozen confections will vary depending on the desired product characteristics but is at least 15 %.

Preferably the frozen aerated confectionary provided at step 'a' has an overrun from 15 to 300 vol. %, more preferably from 20 to 250 vol. % and even more preferably from 25 to 200 vol. %.

The resulting typically partially frozen confections may be dispensed from the SSHE, preferably by extrusion, at suitable temperature and optionally collected in suitable containers and optionally transferred to a blast freezer where the products are hardened. Preferably the dispensing/extrusion temperature is from 0 to - 10 degrees Celsius.

Preferably the frozen aerated confectionary provided at step 'a' is ice cream. The ingredients may be dairy-based (e.g. milk, butter fat, milk powder, dairy cream) or alternatively one or more dairy substitutes (e.g. coconut fat, palm oil, soya protein) can be used.

Water and ice crystals

The frozen aerated confectionary provided at step 'a' comprises from 40 to 85 wt. % of water. Preferably the frozen confectionary provided at step 'a' comprises from 45 to 80 wt. % of water and more preferably from 55 to 75 wt. % of water.

At a temperature of -18 degrees Celsius most, but not all, of the water in the ice confection is frozen and is present in the form of ice crystals. To provide a frozen confectionary having a smooth texture that is malleable and can be scooped and is generally considered of good quality the average size and size distribution of the ice crystals is preferably small. In addition a small average gas bubble size is important as beneficial for the mouth-feel of the frozen aerated confectionary. High quality frozen aerated confectionary is obtained using industrial ice cream making equipment which allows ice crystal / gas bubble formation under high shear, such as made possible by use of SSHE-like equipment.

Preferably the frozen aerated confectionary provided at step 'a' has ice crystals wherein the number average length is at most 90, more preferably is at most 80, even more preferably is at most 70 and still even more preferably is from 10 to 70 micrometer.

The length of an ice crystal is defined as the longest distance on a straight line between any two points on the same ice crystal as can be determined based on a (photograph of) representative cross-section of a frozen aerated confectionary, such as a sample of ice cream. A known technique to assess the ice crystal length is by use of a photograph of a cross-section of a frozen aerated confectionary, such as can be obtained by Cryo SEM.

The above techniques can also be used to measure the aspect ratio of ice crystals in ice cream.

Preferably the frozen aerated confectionary provided at step 'a' has ice crystals wherein the number average aspect ratio is at most 2.5 and preferably is at most 2.

Furthermore the above technique can be used to measure the gas bubble diameter. Preferably the frozen aerated confectionary provided at step 'a' has a number average gas bubble diameter of at most 80 μm, more preferably of at most 70 μm, even more preferably of at most 60 μm, still more preferably of at most 35 μm, still even more preferably of at most 30 μm and still even more preferably of at most 25 μm.

Fat

The frozen aerated confectionary provided at step 'a' comprises from 0.1 to 30 wt. % of fat. On the one hand the presence of fat may improve the organoleptic properties of the frozen aerated confectionaries. On the other hand, preferably the frozen confectionary comprise low fat levels as desired by health conscious consumers.

The frozen confectionary provided at step 'a' preferably comprises from 0.2 to 20 wt. % and more preferably from 0.3 to 16 wt. % of fat. In the case of ice cream the fat preferably is coconut fat and/or a fat of dairy origin such as butter fat.

Protein

The frozen aerated confectionary provided at step 'a' comprises from 0.1 to 7 wt. % of protein. Protein contributes to the flavour and texture of frozen aerated confectionaries and usually comes in concentrated sources, such as in the form of powdered protein. It can be from dairy sources (e.g. skim milk powder, skim milk concentrate, whey protein concentrate) or non dairy sources (soya protein concentrate, pea protein isolate, lupin protein, egg protein).

The frozen aerated confectionary provided at step 'a' preferably comprises form 0.3 to 6 wt. % and more preferably from 0.5 to 5 wt. % of protein.

Freezing Point Depressants and Bulk fillers

The frozen aerated confectionary provided at step 'a' comprises from 5 to 45 wt. % of freezing point depressants and bulk filler. Freezing point depressants and bulk fillers may have a number of functions in ice cream including sweetening, reducing the ice content of the product at temperatures below the freezing point of water and acting as bulk fillers which occupy space and improve the rheology of the matrix phase. They should have a taste &/or flavour which is preferably compatible with ice cream flavour. Examples of suitable freezing point depressant and bulk filler are monosaccharides (e.g. dextrose, fructose, galactose), disaccharides (e.g. sucrose, lactose), starch hydrolysates (e.g. cornsyrup 96 to 20 DE (combination of mono, di and oligosaccharides), maltodextrins (DE <20), soluble fibre (e.g. inulin, froctooligosaccaride, polydextrose), polyols (e.g. erythritol, arabitol, xylitol, sorbitol, mannitol, lactitol, maltitol, cellobiitol, glycerol). Different combinations of these materials may be used as freezing point depressant and bulk filler depending upon the required final product properties including sweetness, calorie content, texture, ice content etc.

The frozen confectionary provided at step 'a' preferably comprises from 10 to 40 wt. %, and more preferably from 12 to 35 wt. % of freezing point depressant and bulk filler.

High Intensity Sweeteners

The frozen aerated confectionary provided at step 'a' may comprise one or more high intensity sweeteners. Examples of suitable high intensity sweeteners are artificial sweeteners (e.g. aspartame, cyclamate, saccharine, acesulfame potassium, sucralose), botanical sweetener systems (e.g. stevia, monk fruit, brazzein), sweetness enhancer systems (e.g. Symlife sweet).

Preferably the frozen aerated confectionary provided at step 'a' comprises at most 1 wt. %, more preferably at most 0.5 wt. % even more preferably at most 0.1 wt. % and still even more preferably no high intensity sweeteners.

Stabilizers and emulsifiers

The frozen aerated confectionary provided at step 'a' may comprise one or more stabilizers. Stabilisers have several beneficial effects in ice cream including improving the processability of ice cream as well as the storage stability of the product and texture on eating (C. Clarke, 2004, The Science of Ice Cream, RSC Paperbacks). For example, the confectionary according to the invention may comprise proteins such as gelatin; plant extrudates such as gum arabic, gum ghatti, gum karaya, gum tragacanth; plant extracts such as konjac gum; seed gums such as locust bean gum, guar gum, tara gum or tamarind seed gum; seaweed extracts such as agar, alginates, carrageenan or furcelleran; pectins such as low methoxyl or high methoxyl-type pectins; cellulose derivatives such as sodium carboxymethyl cellulose, microcrystalline cellulose, methyl and methylethyl celluloses, or hydroxylpropyl and hydroxypropylmethyl celluloses; and microbial gums such as dextran, xanthan or $\beta$-1,3-glucan.

Preferably, the stabiliser is selected from locust bean gum, kappa carrageenan, guar gum, tara gum, alginates or mixtures thereof. Preferably the frozen confectionary provided at step 'a' comprises one or more stabilisers in a total amount of 0 to 2 wt. %.

The frozen aerated confectionary provided at step 'a' may comprise one or more emulsifiers. The role of the emulsifier is to demulsify some of the fat and allow fat globules to aggregate (C. Clarke, 2004, The Science of Ice Cream, RSC Paperbacks). Examples of emulsifiers are lecithin and mono-, diglycerides.

The term stabilizer and emulsifier does not include ingredients having a Trouton ratio of at least 75, such as okra pectin and Jews Mallow pectin, lime flower pectin, yellow mustard gum and flaxseed gum.

Trouton ratio

A commonly measured rheological property of a material is its shear viscosity. Shear viscosity, often referred to as simply viscosity, describes the reaction of a material to applied shear stress. In other words, shear stress is the ratio between "stress" (force per unit area) exerted on the surface of a fluid, in the lateral or horizontal direction, to the change in velocity of the fluid as you move down in the fluid (a 'velocity gradient'). Viscosity is preferably measured using methods known to a person skilled in the art.

Another rheological property of a material is its extensional viscosity. Extensional viscosity is the ratio of the stress required to extend a liquid in the direction of its flow to the extension rate. Extensional viscosity coefficients are widely used for characterizing polymers, where they cannot be simply calculated or estimated from the shear viscosity.

The Trouton ratio is a rheological property of a material, which characterizes the viscoelasticity of the material. It is a dimensionless number calculated as the extensional viscosity over the apparent shear viscosity of a material. For Newtonian liquids this ratio is equal to 3. For non-Newtonian liquids, the shear viscosity is taken at the shear rate equal to 1.73 times the strain rate at which the extensional viscosity was measured, as explained in D. M. Jones, K. Walters, and P.R. Williams, "On the extensional viscosity of mobile polymer solutions", Rheologica Acta 26:20-30 (1987).

The extensional viscosity is determined using a commercially available instrument, which is a Capillary Break-up Extensional Rheometer (CaBER 1 from THERMO Electron Corporation) according to the following procedure: A liquid sample placed between two 6-mm diameter parallel discs sitting 2 mm from each other. The upper disc is quickly pulled up and within 0.05 s it reaches 8 mm separation. A transient liquid bridge (i.e. a filament) is thus formed between the two plates, which ultimately breaks up upon separation of the discs. The instrument measures the diameter of the midpoint of the liquid filament formed between the two discs and it tracks its thinning until the break up point. The method has no means to control the rate at which the filament is thinning (i.e. the strain rate). This rate is determined by the balance of the capillary force, trying to shrink and break the liquid filament, and the opposing viscous force. The latter force is determined by the extensional viscosity which can vary as the contraction rate changes with time. The processing of the raw data and the calculation of the extensional viscosity was done using CaBER Analysis software (V 4.50 Built 29-Nov-04, designed by Cambridge Polymer Group, http://www.campoly.com). For the calculation of the Trouton ratio, the highest stable value of the extensional viscosity was used and the corresponding strain rate was recorded for later use to determine the corresponding shear viscosity value.

Due to instrumental limitations, reliable values of the extensional viscosity may not be obtained for all 0.2 wt. % solutions of ingredients in water, such as for some very thin and relatively inelastic solutions.

In said cases the concentration of the solution can be increased up to the point where a reliable measurement can be taken. It is assumed that the Trouton ratio of 0.2 wt. % solution is lower or at most equal to the Trouton ratio measured at a higher concentration of the ingredient.

According to the present invention the Trouton ratio of the ingredient provided at step 'b' is defined as the Trouton ratio of a 0.2 wt. % solution of the ingredient in water as measured at 20 degrees Celsius and is at least 75 at these conditions. It will be appreciated that suitably the Trouton ratio of an ingredient under said conditions may be inferred by measurements done at a suitable higher concentration of the ingredient.

The shear viscosity is measured using a Cone-Plate geometry using either AR-2000 rheometer (from TA Instruments) or Physica MCR-501 (from Anton Paar). With the AR-2000 a 60 mm diameter 0.5-degree cone was used and with the MCR-501 a 50 mm diameter 2-degree cone was used. The viscosity was measured for a range of shear rates between 1 and 1000 s-1.

All measurements are done at 20 degrees Celsius.

The Trouton ratio of the samples was calculated as:

$$\text{Trouton ratio} = \frac{\text{extensional viscosity (at strain rate from extensional experiments)}}{\text{shear viscosity (at shear rate, equal to the strain rate * 1.73)}}$$

According to the present invention the Trouton ratio of the ingredient provided at step 'b' is defined as the Trouton ratio of a 0.2 wt. % solution of the ingredient in water as measured at 20 degrees Celsius.

It is not required to provide the ingredient at step 'b' in the process according to the invention in the form of a 0.2 wt. % solution in water. For example, the ingredient having a Trouton ratio of at least 75 (as determined as described above) may be added in a more (or less) concentrated solution/dispersion at any suitable temperature (e.g. at 4 degrees Celsius). Preferably the ingredient having a Trouton ratio of at least 75 is provide at step 'b' as a liquid solution and preferably as a liquid aqueous solution.

Preferably the amount of ingredient having a Trouton ratio of at least 75 provided at step 'b' is from 0.001 to 5 wt. %, preferably from 0.002 to 4 wt. %, more preferably from 0.004 to 3 wt. % still even more preferably from 0.006 to 1 wt. % and still even more preferably is from 0.008 to 0.2 wt. %. Said amount of ingredient having a Trouton ratio of at least 75 is based on the dry-weight of said ingredient as based on the total weight of the frozen aerated confectionary according to the invention provided at step 'c'.

Preferably the ingredient provided at step 'b' has a Trouton ratio of at least 100, more preferably of at least 200, even more preferably of at least 300, still more preferably of at least 400 and still even more preferably of at least 500 (i.e. as measured in a 0.2 wt. % solution of said ingredient in water at 20 degrees Celsius). Preferably the Trouton ratio of said ingredient is at most 100 000, more preferably at most 50 000, even more preferably at most 10 000 still more preferably at most 4 000.

Sources of the ingredient having a Trouton ratio of at least 75

Ingredients having a Trouton ratio of at least 75 can be obtained from a variety of sources. Preferably the ingredient having a Trouton ratio of at least 75 is obtained from one or more plant sources. In particular, materials which have mucilaginous nature (e.g. are slimy and typically capable of making slimy threads span between fingers when pulled apart) are believed to be sources for ingredients having a high Trouton ratio. The Trouton ratio of an ingredient may be improved using suitable extraction procedures, such as procedures which enrich for water-soluble polysaccharides. An even more preferred procedure to improve the Trouton ratio of an ingredient is to enrich for water-soluble polysaccharides using precipitation by ethanol.

For example, the ingredient having a Trouton ratio of at least 75 is obtainable as an aqueous extract from *Abelmoschus esculentus* pods (it is noted that *Abelmoschus esculentus* is also known as *Hibiscus esculentus,* 'lady's fingers', 'gumbo' or 'okra'), according to the following procedure:

a) Mixing a pulp of okra pods with ethanol in a weight ratio pulp:ethanol of about 1:2;
b) Filtering the mixture to collect the pulp;
c) Mixing the pulp with hot water (e.g. water having a temperature of about 80 - 100 degrees Celsius) in a weight ratio of pulp:hot water of about 1:15;
d) Centrifuging to obtain water-phase enriched in dissolved polysaccharides;
e) Addition of ethanol to allow precipitation of polysaccharides;
f) Collecting and drying precipitate to provide a plant extract having a Trouton ratio of at least 75.

The obtained okra extract provided at step 'f' is also known as okra pectin.

Other suitable sources

Other sources from which an ingredient having a Trouton ratio above 75 can be obtained include the following:

• *Corchorus* sp., in particular the leaves, also known as 'Jews Mallow', 'Molokhia', 'Mloukhiya' or 'Mulukhiyah';
• *Tilia* sp., in particular *Tilia americana, Tilia europea* and *Tilia cordata,* also known as 'Linden' or 'Lime tree', in particular the flowers, also known as 'Lime Flowers' or 'Lime Blossom'.
• *Sinapis alba,* seed hulls, also known as 'yellow mustard', in particular the gum;
• *Linum usitatissimum,* also known as 'flax', in particular seeds, also known as 'linseed', in particular the gum.

Preferably the ingredient provided at step 'b' comprises or essentially consists of an aqueous extract of *Abelmoschus esculentus* pods, *Corchorus* sp. leaves, *Tilia europea* flowers, *Tilia americana* flowers, *Tilia cordata* flowers, *Linum usitatissimum* seeds, *Sinapis alba* seeds or a mixture thereof; and more preferably comprises or essentially consists of an aqueous extract of *Abelmoschus esculentus* pods.

Preferably the ingredient having a Trouton ratio of at least 75 comprises okra pectin, Jews Mallow pectin, lime flower pectin, yellow mustard gum, flaxseed gum, water-soluble extract of prickly pear cactus (Opuntia ficus-indica), water-soluble extract of Mekabo or any combination thereof and more preferably comprises okra pectin or Jews Mallow pectin or water-soluble extract of prickly pear cactus (Opuntia ficus-indica) or water-soluble extract of Mekabo or a combination thereof.

Preferably said ingredient is provided at step 'b' in a volume which is at most 25 vol. %, more preferably in at most 20 vol. % and even more preferably in at most 15 vol. %, of the volume of the frozen aerated confectionary according to the invention provided at step 'c'.

Mixing at step 'c'

The conditions during mixing of the frozen confectionary provided at step 'a' and the ingredient with a Trouton ratio of at least 75 provided at step 'b' can influence the properties of the resulting frozen aerated confectionary. Short mixing times and/or medium, preferably low, shear favour the formation of a frozen confectionary according to the invention. These mixing conditions are shorter and/or with lower shear as compared to the process conditions which provide the high quality aerated frozen confectionary at step 'a'.

Mixing at high shear and/or for a prolonged time at step 'c' may lead to a frozen aerated confectionary which does not show improved organoleptic properties. However, a skilled person may easily determine the proper mixing conditions by measuring the Trouton ratio of the melted confectionaries.

The Trouton ratio of the melted frozen confectionaries (a.k.a. 'the melt') is the Trouton ratio as measured in a degassed sample of said confectionary at 20 degrees Celsius. It will be appreciated that at a temperature of 20 degrees Celsius the frozen confectionery, such as ice cream, will be melted.

Essentially the Trouton ratio of the melt of the frozen aerated confectionary according to the invention provided at step 'c' should be higher than that of the melt of the frozen aerated confectionary provided at step 'a'. Preferably the Trouton ratio of the melt of frozen aerated confectionary according to the invention is at least 10, more preferably at least 20, even more preferably at least 30, still even more preferably at least 45 higher than that of the melt of the frozen aerated confectionary provided at step 'a'.

It will be appreciated that the Trouton ratio of a melted degassed frozen aerated confectionary can be assessed

EP 2 934 171 B1

using one or more representative samples.

Preferably the mixing at step 'c' is done using a pin-stirrer (e.g. 4 sets of 4 orthogonal pins with each set spaced ca. 2 cm apart along the shaft, situated inside a 1.5 inch outer diameter T-piece pipe whereby the shaft is rotating at 250 rpm), or by using a static mixer (e.g. 1.2 m long multi-twisted metal band, situated in a 1 inch outer diameter pipe) and more preferably by using both a pin-stirrer and static mixer. For example, mixing at step 'c' may be done by first mixing in a pin-stirrer followed by mixing in a static mixer.

Preferably the mixing at step 'c' is carried out by a continuous technique, wherein ice cream exiting from an ice cream freezer is fed into pipework which has a pin stirrer followed by static mixers located inside. The ingredient at step 'b' can be pumped from a hopper through pipework to a T-piece, so that the solution joins the ice cream extrudate just before the pin stirrer. This provides good mixing of the ice cream and the ingredient having a Trouton ratio of at least 75 while maintaining a good Trouton ratio of the melt of the final provided confectionary at step 'c'.

The mixing conditions at step 'c' should be such as not to allow substantial melting of the ice crystals. Preferably mixing is done at a temperature of at most 0, more preferably at most -2, even more preferably at most -5 degrees Celsius.

Frozen aerated confectionary according to the invention

It was found that the frozen aerated confectionary according to the invention, obtained by the process according to the invention at step 'c' shows improved organoleptic properties, such as an improved smoothness, oiliness and mouth-coating and a reduced iciness and coldness. The properties are improved in comparison to the frozen aerated confectionary provided at step 'a'.

The frozen aerated confectionery according to the invention can be characterized by having a certain Trouton ratio of the degassed melted product (i.e. the melt) as measured at 20 degrees Celsius.

A particular preferred embodiment of the frozen aerated confectionary according to the invention is characterized by a Trouton ratio of its melted product which is at least 40.

Accordingly, in a second aspect the invention relates to a frozen aerated confectionery with an overrun of at least 15 vol. % and wherein the number average length of the ice crystals is at most 100 $\mu$m, comprising

- 40 to 85 wt. % of water;
- 0.1 to 30 wt. % of fat;
- 5 to 45 wt. % of freezing point depressant and bulk filler;
- 0.1 to 7 wt. % of protein; and
- 0.001 to 10 wt. % of an ingredient having a Trouton ratio of at least 75, as measured in a 0.2 wt. % solution of said ingredient in water as measured at 20 degrees Celsius;

wherein the Trouton ratio of the degassed melted confectionary as measured at 20 degrees Celsius is at least 40. Preferably the Trouton ratio of the melted degassed frozen aerated confectionary according to the invention, as measured at 20 degrees Celsius is at least 40, more preferably at least 50, even more preferably at least 75, still even more preferably at least 100 and still even more preferably at least 150. Said higher Trouton ratios of the melt are associated with further improved organoleptic properties.

Preferably the Trouton ratio of the melted degassed frozen aerated confectionary according to the invention, as measured at 20 degrees Celsius, is at most 100 000, more preferably at most 50 000, even more preferably at most 10 000, and still even more preferably at most 4 000.

Preferably the frozen aerated confectionery according to the invention has an overrun of from 15 to 300 vol. %, preferably from 20 to 250 vol. % and more preferably from 25 to 200 vol. %.

Preferably the aerated frozen confectionery according to the invention is an ice cream.

Preferably the aerated frozen confectionery according to the invention has ice crystals wherein the number average length is at most 90, preferably is at most 80, more preferably is at most 70 and even more preferably is from 10 to 70 micrometer.

Preferably the aerated frozen confectionery according to the invention has ice crystals wherein the number average aspect ratio is at most 2.5 and preferably is at most 2.

Preferably the frozen aerated confectionery according to the invention has a number average gas bubble diameter of at most 80 $\mu$m, more preferably of at most 70 $\mu$m, even more preferably of at most 60 $\mu$m, still more preferably of at most 35 $\mu$m, still even more preferably of at most 30 $\mu$m and still even more preferably of at most 25 $\mu$m.

Preferably the frozen aerated confectionery according to the invention comprises from 45 to 80 wt. % of water and more preferably from 55 to 75 wt. % of water.

Preferably the frozen aerated confectionery according to the invention comprises from 0.2 to 20 wt. % and more preferably from 0.3 to 16 wt. % of fat.

Preferably the frozen aerated confectionery according to the invention comprises from 0.3 to 6 wt. % and more

8

preferably 0.5 to 5 wt. % of protein.

Preferably the frozen aerated confectionery according to the invention comprises from 10 to 40 wt. %, and more preferably from 12 to 35 wt. % of freezing point depressant and bulk filler.

Preferably the frozen aerated confectionery according to the invention comprises at most 1 wt. %, more preferably at most 0.5 wt. % even more preferably at most 0.1 wt. % and still even more preferably no high intensity sweeteners.

Preferably the frozen aerated confectionery according to the invention comprises an aqueous extract of *Abelmoschus esculentus* pods, *Corchorus* sp. leaves, *Tilia europea* flowers, *Tilia americana* flowers, *Tilia cordata* flowers, *Linum usitatissimum* seeds, *Sinapis alba* seeds or a mixture thereof; and more preferably comprises an aqueous extract of *Abelmoschus esculentus* pods.

Preferably the frozen aerated confectionery according to the invention comprises okra pectin, Jews Mallow pectin, lime flower pectin, yellow mustard gum, flaxseed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

The invention is now illustrated by the following non limiting examples.

**Examples**

Assessment of sensorial properties

The sensorial properties of the frozen aerated confectionaries (e.g. ice cream) were assessed using a trained sensory panel using a descriptive analysis technique. All products were assessed under white light. Water biscuits and warm water were provided for palate cleansing. The sample presentation sequence was randomised and balanced to minimise order and carry-over effects.

Example 1, 3 to 14, and Comparatives A, B, C, E ,F, G and H (see below) were scored on a 10 point scale with a score of 10 being equivalent to a very high attribute rating and zero being equivalent to none of this attribute being sensed.

Example 2 and Comparative D (see below) were scored on a 7 point scale with the Comparative D being assigned a score of 4 for each evaluated attribute. The attributes of Example 2 were scored relative to the attributes of Comparative D. For example, a score of 1 for an attribute (e.g. iciness) of Example 2 indicates a very much lower value of that attribute compared to Comparative D and a score of 7 a very much increased value of said attribute compared to Comparative D.

The definitions of the sensorial attributes are as follows:

- Initial smoothness is the degree to which the sample is perceived as feeling silky, smooth in the mouth during the first two chews, or by rubbing the sample between the tongue and palate.
- Iciness is the amount of ice particles/crystals perceived during the first two chews with the side teeth, or by rubbing the sample between the tongue and palate.
- Coldness is the degree of cold sensation felt on the palate, tongue and sides of the mouth during the first two chews with the side teeth.
- Oiliness is the degree to which the sample is perceived to have an oily, greasy texture during breakdown.
- Final smoothness is the overall silky and smooth impression of the sample.
- Mouth-coating is the amount of coating of fat, sugar, syrup, powder or gum left around the inside of the mouth after the sample has been swallowed or expelled.

Cryo SEM imaging of ice cream samples

Cryo SEM imaging of ice cream samples was carried out using the following protocol: Ice cream was cooled to -80 degrees Celsius. An approximately 5mm x 5mm x 10mm ice cream cut was made and mounted on to 10mm diameter aluminium scanning electron microscopy stub using OCT (water based glue supplied by Agar scientific). The stub itself was pre-cooled to a temperature below the freezing point of the ice cream. The ice cream cut was immediately plunged in to nitrogen slush and transferred to a Gatan Alto 2500 low temperature preparation chamber at $2x10^{-5}$ mBar. The temperature was increased to -90 degrees Celsius after which the ice cream cuts were fractured (shattered) to obtain ice cream shards. The shards were etched, cooled to -110 degrees Celsius and sputter coated with a layer of 2 nm gold. The coated samples were transferred to a Jeol 7600 field emission scanning electron microscope fitted with a Gatan cold stage with a temperature of -130 degrees Celsius. Representative digital images were made at x50, x100, x300 and x1000 magnification levels.

The images were imported into SCANDIUM software v5.2 (build 3554, serial number A249802-C35E556) (Olympus soft imaging solutions GmbH) for analysis. For image analysis at least 790 ice crystals and 730 gas bubbles were manually segmented by defining ice and bubble interfaces using closed polygon outlining software to obtain the aspect ratio, maximum ice crystal length and gas bubble diameter. The results were exported to Microsoft Excel.

To obtain the number average length of the ice-crystals, the sum of the lengths of all the measured ice-crystals was divided by the total number of ice-crystals of which the length was measured.

To obtain the number average gas bubble diameter, the sum of the diameters of all the gas bubbles measured was divided by the total number of gas bubbles of which the diameter measured.

To obtain the number average aspect ratio of the ice-crystals, the sum of all the aspect ratios measured was divided by the total number of ice-crystals of which the aspect ratio was measured.

Trouton ratio

The Trouton ratio is extensional viscosity over the apparent shear viscosity of a material and both as expressed in pascal seconds.

The extensional viscosity was determined using a commercially available instrument, which is a Capillary Break-up Extensional Rheometer (CaBER 1 from THERMO Electron Corporation) according to the following procedure: A liquid sample placed between two 6-mm diameter parallel discs sitting 2 mm from each other. The upper disc is quickly pulled up and within 0.05 s it reaches 8 mm separation. A transient liquid bridge (i.e. a filament) is thus formed between the two plates, which ultimately breaks up upon separation of the discs. The instrument measures the diameter of the midpoint of the liquid filament formed between the two discs and it tracks its thinning until the break up point. The method has no means to control the rate at which the filament is thinning (i.e. the strain rate). This rate is determined by the balance of the capillary force, trying to shrink and break the liquid filament, and the opposing viscous force. The latter force is determined by the extensional viscosity which can vary as the contraction rate changes with time. The processing of the raw data and the calculation of the extensional viscosity was done using CaBER Analysis software (V 4.50 Built 29-Nov-04, designed by Cambridge Polymer Group, http://www.campoly.com). For the calculation of the Trouton ratio, the highest stable value of the extensional viscosity was used and the corresponding strain rate was recorded for later use to determine the corresponding shear viscosity value.

The CaBER Analysis software has a built-in function to select the usable range of data. It cuts off the data where the filament is too thick and its shrinkage is driven by the gravity and leaves the part where the shrinkage is due to the capillary force only. But in addition to this, we also remove the last data points where, after the break-up occurs, the retraction of the broken filament ends causes additional wavy features in the filament diameter data curve.

Due to instrumental limitations reliable values of the extensional viscosity may not be obtained for all 0.2 wt. % solutions of ingredients in water, such as for some very thin and relatively inelastic solutions.

In said cases the concentration of the solution can be increased up to the point where a reliable measurement can be taken. It is assumed that the Trouton ratio of 0.2 wt. % solution is lower or at most equal to the Trouton ratio measured at a higher concentration of the ingredient.

The Trouton ratio of all ice cream melts at 20 degrees Celsius could be successfully measured.

The shear viscosity is measured using a Cone-Plate geometry using either AR-2000 rheometer (from TA Instruments) or Physica MCR-501 (from Anton Paar). With the AR-2000 we used a 60 mm diameter 0.5-degree Cone and with the MCR-501 we used 50 mm diameter 2-degree Cone. The viscosity was measured for a range of shear rates between 1 and 1000 s-1.

All measurements are done at 20 degree Celsius.

The Trouton ratio of the samples was calculated as:

$$\text{Trouton ratio} = \frac{\text{extensional viscosity (at strain rate from extensional experiments)}}{\text{shear viscosity (at shear rate, equal to the strain rate * 1.73)}}$$

Both the Trouton ratio of ice cream melts and of the 0.2 wt. % solutions of ingredients having a Trouton value of at least 75 were measured at 20 degrees Celsius.

The ice creams were periodically stirred during melting to ensure homogeneity of the sample. The Ice cream melts were degassed prior to extensional and shear viscosity measurements.

Preparation of ingredient having a high Trouton ratio

Fresh okra pods were obtained from a local supermarket.

Okra pectin was prepared from fresh okra pods using the following method:

1. First the okra pods were washed, the calyx removed and chopped roughly.

2. The pods were blended using a hand held blender, followed by a Silverson homogenizer (with large hole screen attachment), in the presence of a double weight amount of ethanol.

3. The pulp was sieved (pore size sieve of 75 $\mu$m).

4. The obtained pulp solid was mixed with ethanol and subjected to the Silverson homogenizer twice.

5. Next the solid was separated from the ethanol by vacuum filtration using a Miracloth (with a pore size of 22 to 25 $\mu$m) lining a Buchner funnel.

6. 350g of the obtained solid was combined with 10 g NaCl and boiling water was added to a volume of 5 litres total.

7. The mixture was gently stirred with paddle stirrer for at least 2 hours at 200 rpm.

8. Next the mixture was centrifuged for 55 min at 4000 g.

9. The supernatant was mixed slowly with ethanol, to give a final concentration of ethanol of around 45 wt. %, and stirred by hand over a time period of around 20 minutes. It was then left for at least 1 hour to allow precipitation of the okra pectin.

10. Finally the supernatant/ethanol mixture was sieved (pore size sieve of 90 $\mu$m) and the precipitate was washed in ethanol and dried to obtain the okra pectin.

Frozen Jews Mallow was obtained from a local supermarket, dried lime flower was obtained from Cotsherb (UK), dried flaxseed bran was obtained from Weinan Zhonghe, (China) and dried yellow mustard seed bran was obtained from G.S. Dunn. A similar preparation protocol to that used above was used to prepare Jews Mallow pectin, lime flower pectin, flaxseed gum and yellow mustard seed gum, however, steps 1 to 5 were omitted in these cases.

Trouton ratio of various plant extracts

Solutions were made of okra pectin and of a selection of various commercially available gums and other plant extracts as comparison. The Trouton ratio of the solutions was measured (Table 1).

The extensional shear viscosities of 0.2 wt. % solutions of OSA starch, Gum Arabic, SSPS, methyl cellulose, xanthan gum, HM pectin, water-soluble extract of prickly pear cactus, water-soluble extract of Mekabu, tara gum, carboxymethyl cellulose and sodium alginate could not be measured with the equipment available. In order to obtain a Trouton ratio for these compounds more concentrated solutions were prepared until a reliable measurement could be made. It is assumed that the Trouton ratio of a 0.2 wt. % solution of these compounds will be lower or at most equal to the Trouton ratio obtained at higher concentrations of these compounds (e.g. 1 or 20 wt. % solutions).

Table 1. Trouton ratio of various plant extracts

|  | Concentration (wt. %) | Trouton ratio |
|---|---|---|
| [1]OSA starch | 20 | 13.9 |
| gum arabic | 20 | 4.9 |
| [2]SSPS | 20 | 8.1 |
| methyl cellulose | 1 | 58.5 |
| xanthan gum | 1 | 12.7 |
| locust bean gum | 1 | 29.5 |
| guar gum | 1 | 13.3 |
| k-carrageenan | 1 | 29.8 |
| [3]HM pectin (JM-150) | 2 | 31.2 |
| tara gum | 1 | 5.2 |
| [4]Carboxymethyl cellulose | 2 | 35.0 |
| Sodium alginate | 2 | 3.9 |
| okra pectin | 0.2 | 1823.1 |
| Jews Mallow pectin | 0.2 | 623.0 |
| lime flower pectin | 0.2 | 403.8 |
| yellow mustard gum | 0.2 | 236 |

(continued)

|  | Concentration (wt. %) | Trouton ratio |
|---|---|---|
| Flaxseed gum | 0.2 | 88 |
| water-soluble extract of prickly pear cactus (Opuntia ficus-indica) | 0.2 | 1569 |
| water-soluble extract of Mekabu (flowering sprout of Undaria pinnatifida | 0.2 | 660 |

1: OSA starch (Octenyl succinic anhydride starch.
2: SSPS (Soluble soybean polysaccharides, obtained from SoyFIBE).
3: HM pectin (high- methoxyl citrus pectin, JM-150, obtained from Kelco Co.).
4: Sodium Carboxy M Cellulose (FMC Corporation).

The Trouton ratio of 0.2 wt. % solutions of okra pectin, Jews Mallow pectin, lime flower pectin, yellow mustard gum and flaxseed gum were found to be at least 75. The Trouton ratio of the okra pectin, Jews Mallow pectin, lime flower pectin and yellow mustard gum is clearly far above those of other commonly used plant extracts used in foods.

Composition of the ice cream of Example 1 and Comparatives A to C

Ice cream premix was prepared with a composition as shown in Table 2.

Table 2. Composition of ice cream pre-mix

| Compound | wt. % |
|---|---|
| sucrose | 10.8 |
| skimmed milk powder | 7.5 |
| glucose syrup | 11.3 |
| Dextrose | 2.75 |
| mixed carotenes | 0.05 |
| monoglyceride | 0.45 |
| locust bean gum | 0.18 |
| guar gum | 0.08 |
| carrageenan | 0.03 |
| whey protein concentrate | 2.69 |
| Vanillin | 0.012 |
| coconut oil | 3.29 |
| water | To balance |

The mix was premixed, homogenised using 300 bar pressure, pasteurised and cooled and aged over night at a temperature of between 2 and 5 degrees Celsius.
Separate solutions were made which comprised okra pectin or Jews Mallow pectin as 'ingredient with a Trouton ratio of at least 75' (Solution B or C respectively). A solution similar in composition, but without added okra pectin or Jews Mallow pectin was made as comparative (Solution A) (Table 3).

Table 3. Solutions with or without added okra pectin

| Compound | wt. % | | |
|---|---|---|---|
|  | Solution A | Solution B | Solution C |
| Sucrose | 12.6 | 12.6 | 12.6 |
| Glucose syrup | 13.1 | 13.1 | 13.1 |
| Dextrose | 3.2 | 3.2 | 3.2 |

(continued)

| Compound | wt. % | | |
|---|---|---|---|
| | Solution A | Solution B | Solution C |
| Okra pectin | - | 0.46 | - |
| Jews Mallow pectin | - | - | 0.46 |
| Potassium sorbate | 0.21 | 0.21 | 0.21 |
| Water | To balance | To balance | To balance |

Process to manufacture the ice cream of Example 1, 2 and Comparatives A to D

Ice cream (i.e. frozen aerated confectionary) was manufactured using an MF75 freezer, which comprises an inlet hopper, a pump, a cooled barrel with a dasher and an air-injection inlet; and an outlet nozzle.

Ice cream pre-mix fed to the MF75 freezer at a speed of about 30 litres per hour. A dasher speed of 400 RPM was used and air flow into the barrel was varied between 17 and 55 litres per hour depending upon the desired overrun (for the case of 60 % overrun the air flow was between 22.9 and 24.8 litre per hour). The amount of refrigeration applied to the barrel was controlled to give an ice cream outlet temperature of between -5 and -8 degrees Celsius. The amount of shear which the ice cream receives in the barrel is quite high. The shear will be particularly high between the tip of the dasher blades and the wall of the barrel where the gap is very narrow.

Comparative A was made by adding Solution A to the ice cream premix feed before entry in the MF75 ice cream freezer.

Comparative C was made by adding Solution B to the ice cream premix feed before entry in the MF75 ice cream freezer.

Example 1 was prepared by adding Solution B to the high quality ice cream obtained from the ice cream freezer via a T-piece junction just before a pin stirrer. The ice cream (33 kilograms per hour) and Solution B (3.15 kilograms per hour) were mixed in the pin-stirrer (4x4 pins, 1.5 inch O.D., 250 rpm) and a static mixer (1.2 m long, 1 inch O.D.) The resulting ice cream was collected in 500 ml cardboard containers.

Comparative B and D were prepared as Example 1, but by using Solution A (i.e. without okra pectin) in place of Solution B.

Example 2 was prepared as Example 1, but by using Solution C (i.e. comprising Jews Mallow pectin).

The overrun of the ice creams of Example 1 and the Comparatives A, B and C was about 60 vol. %.

The overrun of the ice creams of Example 2 and the Comparative D was about 100 vol. %.

Results of ice cream of Example 1, 2 and Comparatives A to D

The organoleptic properties of the ice cream of Example 1,2 and Comparatives A to D were assessed. Furthermore, the Trouton ratio of the degassed ice cream melt was determined (Table 4).

Table 4. Organoleptic proprties of the ice cream and Trouton Ratio of the melt

| | Ex.1 | Comp. A | Comp. B | Comp. C | Ex. 2 | Comp. D |
|---|---|---|---|---|---|---|
| Initial smoothness | 3.84 | 3.03 | 3.12 | 3.36 | 5.6 | 4 |
| Iciness | 3.86 | 4.51 | 4.45 | 4.2 | 2.8 | 4 |
| Coldness | 5.07 | 5.81 | 5.49 | 5.59 | 3.2 | 4 |
| Oiliness | 2.56 | 1.80 | 1.86 | 2.19 | n.d. | n.d. |
| Final smoothness | 6.71 | 6.38 | 6.33 | 6.48 | n.d. | n.d. |
| Mouth-coating | 4.67 | 4.24 | 4.24 | 4.34 | n.d. | n.d. |
| Trouton ratio[1] | 231 | 28 | 25 | 30 | 97 | 20 |
| n.d.: not determined 1: Trouton ratio of the degassed ice-cream melt at 20 degrees Celsius | | | | | | |

These results show that mixing of an ingredient with a Trouton ratio of more than 75 (e.g. okra pectin or Jews Mallow pectin) with high quality ice cream (i.e. after the production of the high quality ice cream) leads to substantially improved organoleptic qualities in terms of an improved initial smoothness, oiliness, final smoothness and mouth-coating and a decreased coldness and iciness of ice cream. Characteristically the Trouton ratio of the melt of the ice cream of Example 1 is greater than 40.

Composition of the ice cream of Examples 3 to 14 and Comparatives E to H

An ice cream premix was prepared with a composition as shown in Table 2.

The mix was premixed, homogenised using 300 bar pressure, pasteurised and cooled to below 6 °C, then aged over night between 2 to 5 degrees Celsius.

Separate solutions were made which comprised okra pectin as 'ingredient with a Trouton ratio of at least 75' in various amounts (Solution E to H). A solution similar in composition, but without the okra pectin was used as comparative (Solution D) (Table 5).

Table 5. Solutions with or without added okra pectin

| Compound | wt. % | | | | |
|---|---|---|---|---|---|
| | Solution D | Solution E | Solution F | Solution G | Solution H |
| Sucrose | 12.6 | 12.6 | 12.6 | 12.6 | 12.5 |
| Glucose syrup | 13.1 | 13.1 | 13.1 | 13.1 | 13.0 |
| Dextrose | 3.2 | 3.2 | 3.2 | 3.2 | 3.2 |
| Okra pectin | - | 0.11 | 0.23 | 0.46 | 0.91 |
| Potassium sorbate | 0.21 | 0.21 | 0.21 | 0.21 | 0.21 |
| Water | To balance | To balance | To balance | To balance | To balance |

Process to manufacture the ice cream of Examples 3 to 14 and Comparatives E to H

The Ice cream premix was fed into an MF75 ice cream freezer and extruded at a temperature of between -6 and -8 °C. The overrun of the ice cream was controlled by varying the airflow into the MF75. High quality ice cream was produced with an overrun of 40, 60, 100 or 150 vol. %.

The ice cream of Examples 3 to 14 and Comparatives E to H were made by adding one of the solutions D to H to one of the high quality ice cream with an overrun of 40, 60, 100 or 150 vol. % according to table 6.

Table 6. Combinations of Solution and ice cream to provide Examples 3 to 14 and Comparatives E to H.

| Ice cream | wt. % | | | | |
|---|---|---|---|---|---|
| Overrun (vol. %) | Solution D | Solution E | Solution F | Solution G | Solution H |
| 40 | Comp. E | Ex. 3 | Ex. 7 | not done | not done |
| 60 | Comp. F | Ex. 4 | Ex. 8 | Ex. 11 | not done |
| 100 | Comp. G | Ex. 5 | Ex. 9 | Ex. 12 | not done |
| 150 | Comp. H | Ex. 6 | Ex. 10 | Ex. 13 | Ex. 14 |

Ice cream obtained from the freezer was mixed with one of the Solutions C-G via a T-piece junction just before a pin stirrer. The ratio of ice cream:Solution was 10.5:1 by weight. The ice cream and Solution were mixed in a pin-stirrer (4x4 pins, 1.5 inch O.D., 250 rpm) and a static mixer (1.2 m long, 1 inch O.D.). The resulting ice cream was collected in 500 ml cardboard containers.

Results of ice cream of Examples 3 to 14 and Comparatives E to H

The organoleptic properties of the ice cream of Examples 3 to 14 and Comparatives E to H were assessed. Furthermore, the Trouton ratio of the ice cream melt was determined (Table 7 to 10 ).

Table 7. Organoleptic properties of the ice cream (about 40 vol. % overrun) and Trouton Ratio of the melt

|  | Comparative E | Example 3 | Example 7 |
|---|---|---|---|
| Initial smoothness | 3.53 | 3.48 | 4.18 |
| Iciness | 4.43 | 4.55 | 4.1 |
| Coldness | 5.82 | 5.65 | 5.57 |
| Oiliness | 1.78 | 1.92 | 2.04 |
| Final smoothness | 6.35 | 6.49 | 6.8 |
| Mouth-coating | 4.37 | 4.55 | 4.58 |
| Trouton ratio[1] | 20 | 93 | 165 |
| 1: Trouton ratio of the degassed ice-cream melt at 20 degrees Celsius | | | |

Table 8. Organoleptic properties of the ice cream (about 60 vol. % overrun) and Trouton Ratio of the melt

|  | Comparative F | Example 4 | Example 8 | Example 11 |
|---|---|---|---|---|
| Initial smoothness | 3.13 | 3.5 | 3.51 | 4.06 |
| Iciness | 4.6 | 4.25 | 4.2 | 3.97 |
| Coldness | 5.73 | 5.46 | 5.53 | 5.2 |
| Oiliness | 1.71 | 1.97 | 1.99 | 2.22 |
| Final smoothness | 6.25 | 6.5 | 6.54 | 6.86 |
| Mouth-coating | 4.11 | 4.54 | 4.67 | 4.82 |
| Trouton ratio[1] | 25 | 90 | 141 | 231 |
| 1: Trouton ratio of the degassed ice-cream melt at 20 degrees Celsius | | | | |

Table 9. Organoleptic proprties of the ice cream (about 100 vol. % overrun) and Trouton Ratio of the melt

|  | Comparative G | Example 5 | Example 9 | Example 12 |
|---|---|---|---|---|
| Initial smoothness | 2.79 | 3.32 | 3.6 | 3.66 |
| Iciness | 4.64 | 4.32 | 4.09 | 4.18 |
| Coldness | 5.55 | 5.39 | 5.37 | 5.18 |
| Oiliness | 1.58 | 1.84 | 2.02 | 2.06 |
| Final smoothness | 6.12 | 6.38 | 6.45 | 6.7 |
| Mouth-coating | 4.18 | 4.43 | 4.43 | 4.92 |
| Trouton ratio[1] | 21 | 72 | 104 | 207 |
| 1: Trouton ratio of the degassed ice-cream melt at 20 degrees Celsius | | | | |

Table 10. Organoleptic properties of the ice cream (about 150 vol. % overrun) and Trouton Ratio of the melt

|  | Comparative H | Example 6 | Example 10 | Example 13 | Example 14 |
|---|---|---|---|---|---|
| Initial smoothness | 2.8 | 3.35 | 3.3 | 3.65 | 3.94 |
| Iciness | 4.59 | 4.2 | 4.15 | 4.04 | 3.6 |
| Coldness | 5.53 | 5.11 | 5.2 | 5.12 | 4.71 |

(continued)

|  | Comparative H | Example 6 | Example 10 | Example 13 | Example 14 |
|---|---|---|---|---|---|
| Oiliness | 1.64 | 1.78 | 1.88 | 2.19 | 2.34 |
| Final smoothness | 6.1 | 6.31 | 6.45 | 6.66 | 6.69 |
| Mouth-coating | 4.14 | 4.34 | 4.39 | 4.99 | 4.75 |
| Trouton ratio[1] | 23 | 85 | 251 | 284 | 305 |
| 1: Trouton ratio of the degassed ice-cream melt at 20 degrees Celsius, | | | | | |

These results show an overall positive effect of okra pectin addition (ingredient having a Trouton ratio of at least 75) on the initial smoothness, oiliness, final smoothness and mouth-coating and decreases the coldness and iciness of ice cream.

Comparatives I and J

Two ice creams were prepared (Comparatives I and J) to analyze the effect of high shear (i.e. standard processing techniques) versus low shear (home-made) manufacturing techniques on the quality of the ice cream. The quality was assessed by measuring the number average length of ice crystals, the aspect ratio of the ice crystals and the number average diameter of the gas bubbles. The home-made technique to make ice cream was based on the method as described in Romanchik et. al. 'Sensory evaluation ratings and melting characteristics show that okra gum is an acceptable milk-fat ingredient substitute in chocolate frozen dairy dessert' (2006; vol. 106, pp. 595, Table 1).

**Industrially made Ice cream manufacturing method**

Table 11 shows the formulation of the ice-cream premix of Comparative I.

Table 11. Composition of the ice cream pre-mix of Comparative I

| Compound | wt. % |
|---|---|
| sucrose | 11 |
| skimmed milk powder | 6.8 |
| glucose syrup | 11.4 |
| dextrose | 2.78 |
| mixed carotene | 0.05 |
| monoglyceride | 0.41 |
| locust bean gum | 0.17 |
| guar gum | 0.07 |
| carrageen an | 0.03 |
| whey protein concentrate | 2.44 |
| vanillin | 0.01 |
| Coconut oil | 3 |
| water | To balance |

Process to manufacture Comparative I

The mix was homogenized at 300 bar, pasteurised, cooled and then aged overnight between 2 and 5 degrees Celsius. Ice cream was prepared from this premix using an MF75 ice cream freezer. The overrun of the sample was 60 vol. %.

**Home made ice cream**

The Ice cream pre-mix was prepared with the following formulation as based on Romanchik et. al. 'Sensory evaluation ratings and melting characteristics show that okra gum is an acceptable milk-fat ingredient substitute in chocolate frozen dairy dessert' (2006; vol. 106, pp. 595, Table 1).

Table 12. Composition of the ice cream pre-mix of Comparative J

| Compound | wt. % |
|---|---|
| Sucrose | 16.5 |
| egg yolk | 3.4 |
| salt | 0.14 |
| cocoa powder | 2.2 |
| milk | To balance |

Process to manufacture Comparative J

The home-made process to manufacture the ice cream of Comparative J was as follows: The ingredients were combined using a wire whisk then pasteurized. The mix was aged for 48 hours below 5 °C. It was then frozen to -5 °C and whipped in a Kenwood Chef mixer for 45 seconds to give an overrun of around 30 %. The mix was spread into containers and hardened in a freezer at -20 °C.

Analyses of Comparative I and J

Cryo SEM imaging of ice cream samples was carried out as described and the ice crystal aspect ratio, ice crystal length and gas bubble diameter measured. At least 790 ice crystals and 730 gas bubble were assessed for each sample (Table 13, 14 and 15).

Table 13. aspect ratio of ice crystals of Comparatives I and J

| Aspect ratio | Normalized frequency distribution (%) | |
|---|---|---|
| | Comparative I | Comparative J |
| 0 - 1.75 | 74.3 | 14.0 |
| 1.75 - 2.25 | 18.2 | 19.7 |
| 2.25 - 2.75 | 5.3 | 17.1 |
| 2.75 - 3.25 | 1.4 | 16.2 |
| 3.25 - 3.75 | 0.6 | 9.4 |
| 3.75 - 4.25 | 0.1 | 8.0 |
| 4.25 - 4.75 | 0.1 | 5.2 |
| 4.75 - 5.25 | 0 | 4.0 |
| 5.25 - 5.75 | 0 | 2.5 |
| 5.75 - 6.25 | 0.1 | 2.0 |
| 6.25 - 6.75 | 0 | 0.6 |
| 6.75 - 7.25 | 0 | 0.7 |
| >7.25 | 0 | 0.6 |
| number average aspect ratio | 1.6 | 3.0 |

Table 14 Length of ice crystals of Comparatives I and J

| Length (μm) | Normalized frequency distribution (%) | |
| --- | --- | --- |
| | Comparative I | Comparative J |
| 0 - 50 | 92.4 | 6.4 |
| 50 - 100 | 7.5 | 20.5 |
| 100 - 150 | 0.1 | 17.7 |
| 150 - 200 | 0 | 17.8 |
| 200 - 250 | 0 | 10.9 |
| 250 -300 | 0 | 10.1 |
| 300 -350 | 0 | 4.9 |
| 350 -400 | 0 | 3.4 |
| 400 -450 | 0 | 2.4 |
| 450 -500 | 0 | 0.8 |
| >500 | 0 | 5.1 |
| number average length | 31 | 200 |

Table 15. Gas bubble size of Comparatives I and J

| Gas-bubble diameter (μm) | Normalized frequency distribution (%) | |
| --- | --- | --- |
| | Comparative I | Comparative J |
| 0 -10 | 60.9 | 0.0 |
| 10 -20 | 15.4 | 2.3 |
| 20 -30 | 8.2 | 11.5 |
| 30 -40 | 7.7 | 9.6 |
| 40 - 50 | 4.6 | 12.0 |
| 50 -60 | 2 | 11.4 |
| 60 -70 | 0.7 | 8.3 |
| 70 - 80 | 0.4 | 9.3 |
| 80 - 90 | 0.1 | 5.5 |
| 90 - 100 | 0 | 4.0 |
| >100 | 0 | 26.1 |
| number average diameter | 15 | 88 |

Clearly, the ice-cream of Comparative I, made using high-shear processing results in ice-cream having better quality compared to Comparative J. For example, the ice cream of Comparative I has a smaller number average of the ice crystal length, a smaller number average of the aspect ratio of the ice crystals and a smaller number average of the gas bubble diameter.

Example 15: Assessment of sensorial properties of ice cream comprising water-soluble extract of prickly pear cactus (Opuntia ficus-indica).

A water-soluble extract of prickly pear cactus was extracted from 3 kg cactus pad pulp diluted with 1 L de-ionised water, by squeezing through muslin cloth in a wine press with minimal shearing. The cactus extract was then combined with sucrose to give a 20 % w/w solution of sucrose. This solution was then post added at a mixing ratio of 0.277 to 1 to ice cream made with the following formulation to produce a test ice cream.

Table 16. Ice cream formulation (parts by weight)

| | |
|---|---|
| **Water** | 48.578 |
| Sucrose dry powder | 15.028 |
| Milk skimmed powder | 6.994 |
| LF9%, glucose, 63de,78DM | 15.028 |
| Dextrose monohydrate | 4.298 |
| mixed carotenes,E160a, 2% | 0.048 |
| Monoglyceride PS222 | 0.109 |
| Monoglyceride hp60 | 0.219 |
| Locust bean gum | 0.181 |
| Guar gum | 0.077 |
| Carrageenan, kappa rich | 0.030 |
| Whey protein concentrate 30%, powder | 2.513 |
| Vanillin | 0.012 |
| COCONUT OIL | 6.557 |
| Vanilla bean pod paste | 0.328 |

A control ice cream was prepared by shearing the cactus extract/sucrose solution for 2 minutes using a Silverson mixer prior to addition to the ice cream made according to the formulation in Table 16.

The ice cream was made at 85 % over run. Sensory assessment was performed on the test and control ice creams according to the previously described protocol. The Trouton ratios of the ice creams melts were 71.0 and 35.8 for the test and control ice creams respectively.

The sensory results from an expert panel of 7 people are shown in table 17. This shows that the test ice cream was more smooth, more chewy, more mouth coating and less icy and less cold eating than the control ice cream.

Table 17. Difference in sensorial attributes of test over control ice cream comprising aqueous extract of prickly pear cactus

| | Initial smoothness | Mouth coating | Iciness | Coldness |
|---|---|---|---|---|
| Score relative to control | +1.00 | +0.71 | -0.71 | -0.57 |
| Assessment | More smooth | More mouth coating | Less icy | Less cold |

**Claims**

1.  A process for the manufacture of a frozen aerated confectionary with an overrun of at least 15 vol. % and wherein the number average length of the ice crystals is at most 100 $\mu$m, comprising the following steps:

    a) providing a frozen aerated confectionary with an overrun of at least 15 vol. % and wherein the number average length of the ice crystals is at most 100 $\mu$m comprising

    • 40 to 85 wt. % of water;
    • 0.1 to 30 wt. % of fat;
    • 5 to 45 wt % freezing point depressant and bulk filler; and
    • 0.1 to 7 % protein

    b) providing an ingredient having a Trouton ratio of at least 75, as measured in a 0.2 wt. % solution of said ingredient in water as measured at 20 degrees Celsius; wherein the ingredient is provided in an amount of 0.001 to 10 wt. %, based on the weight of the final composition;
c) mixing said frozen confectionary provided at step 'a' with the ingredient provided at step 'b' to provide a frozen aerated confectionary according to the invention.

2. A process according to claim 1, wherein the confectionary provided at step 'a' has an overrun of from 15 to 300 vol. %, preferably from 20 to 250 vol. % and more preferably from 25 to 200 vol. %.

3. A process according to claim 1 or claim 2, wherein the confectionary provided at step 'a' is ice cream.

4. A process according to any one of claims 1 to 3, wherein the confectionary provided at step 'a' has ice crystals wherein the number average length is at most 90, preferably is at most 80, more preferably is at most 70 and even more preferably is from 10 to 70 micrometer.

5. A process according to any one of the preceding claims wherein the freezing point depressant and bulk filler are selected from the group consisting of monosaccharides, disaacharides, starch hydrolysates, maltodextrins and polyols.

6. A process according to any one of the preceding claims wherein the bulk filler is an optional ingredient.

7. A process according to any one of the preceding claims, wherein the confectionery provided at step 'a' comprises from 0.2 to 20 wt. % and preferably from 0.3 to 16 wt. % of fat.

8. A process according to any one of the preceding claims, wherein the amount of ingredient having a Trouton ratio of at least 75 provided at step 'b' is from 0.001 to 5 wt. %, preferably from 0.002 to 4 wt. %, more preferably from 0.004 to 3 wt. %, even more preferably from 0.006 to 1 wt. % and still even more preferably is from 0.008 to 0.2 wt. %, based on the total weight of the frozen aerated confectionary according to the invention provided at step 'c'.

9. A process according to any one of the preceding claims, wherein the ingredient provided at step 'b' has a Trouton ratio of at least 100, preferably of at least 200, more preferably of at least 300, still more preferably of at least 400 and still even more preferably of at least 500.

10. A process according to any one of the preceding claims, wherein the ingredient provided at step 'b' comprises okra pectin, Jews Mallow pectin, lime flower pectin, yellow mustard gum, flaxseed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

11. A process according to any one of the preceding claims, wherein the ingredient having a Trouton ratio of at least 75 is provided at step 'b' in a volume which is at most 25 vol. %, more preferably in at most 20 vol. % and even more preferably in at most 15 vol. %, of the volume of confectionary according to the invention provided at step 'c'.

12. A process according to any one of the preceding claims, wherein the Trouton ratio of the degassed melt of frozen aerated confectionary according to the invention provided at step 'c' is at least 10, more preferable at least 20, even more preferably at least 30 and still more preferably at least 45 higher than that of the degassed melt of the frozen aerated confectionary provided at step 'a'.

13. A frozen aerated confectionery with an overrun of at least 15 vol. % and wherein the number average length of the ice crystals is at most 100 $\mu$m, comprising

• 40 to 85 wt. % of water;
• 0.1 to 30 wt. % of fat;
• 5 to 45 wt. % of freezing point depressant and bulk filler; and
• 0.1 to 7 wt. % of protein;
• 0.001 to 10 wt. % of an ingredient having a Trouton ratio of at least 75, as measured in a 0.2 wt. % solution of said ingredient in water as measured at 20 degrees Celsius;

wherein the Trouton ratio of the degassed melted confectionary as measured at 20 degrees Celsius is at least 40.

14. A frozen aerated confectionery according to claim 13 wherein the bulk filler is an optional ingredient.

15. A frozen aerated confectionery according to claim 13 or claim 14, wherein the Trouton ratio of the degassed melted confectionary as measured at 20 degrees Celsius is at least 50, preferably at least 75, more preferably at least 100 and even more preferably at least 150.

16. A frozen aerated confectionery according to any one of claims 13 to 15, wherein the confectionary is ice cream.

17. A frozen aerated confectionery according to any one of claims 13 to 16, wherein the overrun is from 15 to 300 vol. %, preferably from 20 to 250 vol. % and more preferably from 25 to 200 vol. %.

18. A frozen aerated confectionery according to any one of claims 13 to 17, wherein the number average length of the ice crystals is at most 90, preferably is at most 80, more preferably is at most 70 and even more preferably is from 10 to 70 micrometer.

## Patentansprüche

1. Verfahren zur Herstellung eines gefrorenen, mit Luft durchsetzten Konfekts mit einem Überlauf von mindestens 15 Vol.-% und wobei die zahlengemittelte Länge der Eiskristalle höchstens 100 $\mu$m beträgt, umfassend die folgenden Schritte:

   a) Bereitstellen eines gefrorenen, mit Luft durchsetzten Konfekts mit einem Überlauf von mindestens 15 Vol.-% und wobei die zahlengemittelte Länge der Eiskristalle höchstens 100 $\mu$m beträgt, umfassend

   • 40 bis 85 Gew.-% Wasser,
   • 0,1 bis 30 Gew.-% Fett,
   • 5 bis 45 Gew.-% Gefrierpunkterniedriger und Massefüllstoff und
   • 0,1 bis 7% Protein,

   b) Bereitstellung einer Zutat mit einem Trouton-Verhältnis von mindestens 75, gemessen in einer 0,2 gew.-%-igen Lösung der Zutat in Wasser, gemessen bei 20 Grad Celsius, wobei die Zutat in einer Menge von 0,001 bis 10 Gew.-%, bezogen auf das Gewicht der Endzusammensetzung, bereitgestellt wird,
   c) Mischen des gefrorenen Konfekts, bereitgestellt im Schritt 'a', mit der Zutat, bereitgestellt im Schritt 'b', um ein gefrorenes, mit Luft durchsetztes Konfekt gemäß der Erfindung bereitzustellen.

2. Verfahren nach Anspruch 1, wobei das Konfekt, bereitgestellt im Schritt 'a', einen Überlauf von 15 bis 300 Vol.-%, vorzugsweise von 20 bis 250 Vol.-% und bevorzugter von 25 bis 200 Vol.-% aufweist.

3. Verfahren nach Anspruch 1 oder Anspruch 2, wobei das Konfekt, bereitgestellt im Schritt 'a', Eiskreme ist.

4. Verfahren nach irgendeinem der Ansprüche 1 bis 3, wobei das Konfekt, bereitgestellt im Schritt 'a', Eiskristalle aufweist, wobei die zahlengemittelte Länge höchstens 90, vorzugsweise höchstens 80, bevorzugter höchstens 70 und sogar bevorzugter 10 bis 70 Mikrometer beträgt.

5. Verfahren nach irgendeinem der vorhergehenden Ansprüche, wobei der Gefrierpunkterniedriger und der Massefüllstoff aus der Gruppe ausgewählt sind, die aus Monosacchariden, Disacchariden, Stärkehydrolysaten, Maltodextrinen und Polyolen besteht.

6. Verfahren nach irgendeinem der vorhergehenden Ansprüche, wobei der Massefüllstoff eine fakultative Zutat darstellt.

7. Verfahren nach irgendeinem der vorhergehenden Ansprüche, wobei das Konfekt, bereitgestellt im Schritt 'a', von 0,2 bis 20 Gew.-% und vorzugsweise von 0,3 bis 16 Gew.-% Fett umfasst.

8. Verfahren nach irgendeinem der vorhergehenden Ansprüche, wobei die Menge der Zutat mit einem Trouton-Verhältnis von mindestens 75, bereitgestellt im Schritt 'b', von 0,001 bis 5 Gew.-%, vorzugsweise von 0,002 bis 4 Gew.-%, bevorzugter von 0,004 bis 3 Gew.-%, sogar bevorzugter von 0,006 bis 1 Gew.-% und sogar noch bevorzugter von 0,008 bis 0,2 Gew.-%, bezogen auf das Gesamtgewicht des gefrorenen, mit Luft durchsetzten Konfekts gemäß der vorliegenden Erfindung, bereitgestellt im Schritt 'c', beträgt.

9. Verfahren nach irgendeinem der vorhergehenden Ansprüche, wobei die Zutat, bereitgestellt im Schritt 'b', ein Trouton-Verhältnis von mindestens 100, vorzugsweise mindestens 200, bevorzugter mindestens 300, noch bevorzugter mindestens 400 und sogar noch bevorzugter mindestens 500 aufweist.

10. Verfahren nach irgendeinem der vorhergehenden Ansprüche, wobei die Zutat, bereitgestellt im Schritt 'b', umfasst Okra-Pectin, Juden-Malven-Pectin, Lindenblütenpectin, Gelbsenfgummi, Leinsamengummi, wasserlöslichen Extrakt von Kaktusfeigen (Opuntia ficus-indica), wasserlöslichen Extrakt von Mekabu oder irgendeine Kombination davon und bevorzugter umfasst Okra-Pectin oder Juden-Malven-Pectin oder wasserlöslichen Extrakt von Kaktusfeigen (Opuntia ficus-indica) oder wasserlöslichen Extrakt von Mekabu oder einer Kombination davon.

11. Verfahren nach irgendeinem der vorhergehenden Ansprüche, wobei die Zutat mit einem Trouton-Verhältnis von mindestens 75 im Schritt 'b' in einem Volumen bereitgestellt wird, das höchstens 25 Vol.-%, bevorzugter höchstens 20 Vol.-%, und sogar bevorzugter höchstens 15 Vol.-% des Volumens des Konfekts gemäß der vorliegenden Erfindung, bereitgestellt im Schritt 'c', beträgt.

12. Verfahren nach irgendeinem der vorhergehenden Ansprüche, wobei das Trouton-Verhältnis der entgasten Schmelze des gefrorenen, mit Luft durchsetzten Konfekts gemäß der Erfindung, bereitgestellt im Schritt 'c', mindestens 10, bevorzugter mindestens 20, sogar bevorzugter mindestens 30 und noch bevorzugter mindestens 45 höher als das der entgasten Schmelze des gefrorenen, mit Luft durchsetzten Konfekts, bereitgestellt im Schritt 'a', beträgt.

13. Gefrorenes, mit Luft durchsetztes Konfekt mit einem Überlauf von mindestens 15 Vol.-% und wobei die zahlenmittlere Länge der Eiskristalle höchstens 100 μm beträgt, umfassend

   • 40 bis 85 Gew.-% Wasser,
   • 0,1 bis 30 Gew.-% Fett,
   • 5 bis 45 Gew.-% Gefrierpunkterniedriger und Massefüllstoff und
   • 0,1 bis 7 Gew.-% Protein,
   • 0,001 bis 10 Gew.-% einer Zutat mit einem Trouton-Verhältnis von mindestens 75, gemessen in einer 0,2 gew.-%-igen Lösung der Zutat in Wasser, gemessen bei 20 Grad Celsius,

   wobei das Trouton-Verhältnis des entgasten geschmolzenen Konfekts, gemessen bei 20 Grad Celsius, mindestens 40 beträgt.

14. Gefrorenes, mit Luft durchsetztes Konfekt gemäß Anspruch 13, wobei der Massefüllstoff eine fakultative Zutat ist.

15. Gefrorenes, mit Luft durchsetztes Konfekt gemäß Anspruch 13 oder Anspruch 14, wobei das Trouton-Verhältnis des entgasten geschmolzenen Konfekts, gemessen bei 20 Grad Celsius, mindestens 50, vorzugsweise mindestens 75, bevorzugter mindestens 100 und sogar bevorzugter mindestens 150 beträgt.

16. Gefrorenes, mit Luft durchsetztes Konfekt gemäß irgendeinem der Ansprüche 13 bis 15, wobei das Konfekt Eiskreme darstellt.

17. Gefrorenes, mit Luft durchsetztes Konfekt gemäß irgendeinem der Ansprüche 13 bis 16, wobei der Überlauf von 15 bis 300 Vol.-%, vorzugsweise von 20 bis 250 Vol.-% und bevorzugter von 25 bis 200 Vol.-% beträgt.

18. Gefrorenes, mit Luft durchsetztes Konfekt gemäß irgendeinem der Ansprüche 13 bis 17, wobei die zahlengemittelte Länge der Eiskristalle höchstens 90, vorzugsweise höchstens 80, bevorzugter höchstens 70 und sogar bevorzugter 10 bis 70 Mikrometer beträgt.

**Revendications**

1. Procédé pour la fabrication d'une confiserie aérée glacée avec un dépassement d'au moins 15 % en volume et dans lequel la longueur moyenne en nombre des cristaux de glace est d'au plus 100 μm, comprenant les étapes suivantes de :

a) fourniture d'une confiserie aérée glacée avec un dépassement d'au moins 15 % en volume et dans lequel la longueur moyenne en nombre des cristaux de glace est d'au plus 100 μm comprenant

- de 40 à 85 % en masse d'eau;
- de 0,1 à 30 % en masse de graisse;
- de 5 à 45 % en masse de charge en vrac et d'abaisseur du point de congélation ; et
- de 0,1 à 7 % de protéine

b) fourniture d'un ingrédient ayant un rapport Trouton d'au moins 75, comme mesuré dans une solutilon à 0,2 % en masse dudit ingrédient dans de l'eau comme mesuré à 20 degrés Celsius; dans lequel l'ingrédient est fourni dans une quantité de 0,001 à 10 % en masse, rapporté à la masse de la composition finale ;
c) mélange de ladite confiserie glacée fournie dans l'étape 'a' avec l'ingrédient fourni dans l'étape 'b' pour fournir une confiserie aérée glacée selon l'invention.

2. Procédé selon la revendication 1, dans lequel la confiserie fournie dans l'étape 'a' présente un dépassement de 15 à 300 % en volume, de préférence de 20 à 250 % en volume et encore mieux de 25 à 200 % en volume.

3. Procédé selon la revendication 1 ou la revendication 2, dans lequel la confiserie fournie dans l'étape 'a' est une crème glacée.

4. Procédé selon l'une quelconque des revendications 1 à 3, dans lequel la confiserie fournie dans l'état 'a' présente des cristaux de glace dans lequel la longueur moyenne en nombre est d'au plus 90, de préférence d'au plus 80, encore mieux d'au plus 70 et bien mieux encore de 10 à 70 micromètres.

5. Procédé selon l'une quelconque des revendications précédentes, dans lequel la charge en vrac et l'abaisseur du point de congélation sont choisis dans le groupe constitué de monosaccharides, disaccharides, hydrolysats d'amidon, maltodextrines et polyols.

6. Procédé selon l'une quelconque des revendications précédentes, dans lequel la charge en vrac est un ingrédient facultatif.

7. Procédé selon l'une quelconque des revendications précédentes, dans lequel la confiserie fournie dans l'étape 'a' comprend de 0,2 à 20 % en masse et de préférence de 0,3 à 16 % en masse de graisse.

8. Procédé selon l'une quelconque des revendications précédentes, dans lequel la quantité d'ingrédient ayant un rapport Trouton d'au moins 75 fourni dans l'étape 'b' est de 0,001 à 5 % en masse, de préférence de 0,002 à 4 % en masse, encore mieux de 0,004 à 3 % en masse, bien mieux encore de 0,006 à 1 % en masse et particulièrement de préférence de 0,008 à 0,2 % en masse, rapporté à la masse totale de la confiserie aérée glacée selon l'invention fournie dans l'étape 'c'.

9. Procédé selon l'une quelconque des revendications précédentes, dans lequel l'ingrédient fourni dans l'étape 'b' présente un rapport Trouton d'au moins 100, de préférence d'au moins 200, encore mieux d'au moins 300, bien mieux encore d'au moins 400 et particulièrement de préférence d'au moins 500.

10. Procédé selon l'une quelconque des revendications précédentes, dans lequel l'ingrédient fourni dans l'étape 'b' comprend de la pectine okra, de la pectine Jews Mallow, de la pectine de fleur de tilleul, de la gomme de moutarde jaune, de la gomme de graines de lin, un extrait soluble dans l'eau de cactus de figue de Barbarie (Opuntia ficus-indica), un extrait soluble dans l'eau de Mekabu ou une combinaison quelconque de ceux-ci et comprend encore mieux de la pectine okra ou de la pectine Jews Mallow ou un extrait soluble dans l'eau de cactus de figue de Barbarie (Opuntia ficus-indica) ou un extrait soluble dans l'eau de Mekabu ou une combinaison de ceux-ci.

11. Procédé selon l'une quelconque des revendications précédentes, dans lequel l'ingrédient présentant un rapport Trouton d'au moins 75 est fourni dans l'étape 'b' dans un volume qui est d'au plus 25 % en volume, encore mieux d'au plus 20 % en volume et bien mieux encore d'au plus 15 % en volume du volume de confiserie selon l'invention fournie dans l'étape 'c'.

12. Procédé selon l'une quelconque des revendications précédentes, dans lequel le rapport Trouton de la masse en fusion dégazée de confiserie aérée glacée selon l'invention fournie dans l'étape 'c' est d'au moins 10, encore mieux d'au moins 20, bien mieux encore d'au moins 30 et particulièrement de préférence d'au moins 45 supérieur à celui de la masse en fusion dégazée de la confiserie aérée glacée fournie dans l'étape 'a'.

13. Confiserie aérée glacée avec un dépassement d'au moins 15 % en volume et dans laquelle la longueur moyenne en nombre des cristaux de glace est d'au plus 100 $\mu$m, comprenant

   • de 40 à 85 % en masse d'eau ;
   • de 0,1 à 30 % en masse de graisse;
   • de 5 à 45 % en masse de charge en vrac et d'abaisseur du point de congélation ; et
   • de 0,1 à 7 % en masse de protéine;
   • de 0,001 à 10 % en masse d'un ingrédient présentant un rapport Trouton d'au moins 75, comme mesuré dans une solution à 0,2 % en masse dudit ingrédient dans de l'eau comme mesuré à 20 degrés Celsius ;

   dans laquelle le rapport Trouton de la confiserie fondue dégazée comme mesuré à 20 degrés Celsius est d'au moins 40.

14. Confiserie aérée glacée selon la revendication 13, dans laquelle la charge en vrac est un ingrédient facultatif.

15. Confiserie aérée glacée selon la revendication 13 ou la revendication 14, dans laquelle le rapport Trouton de la confiserie fondue dégazée comme mesuré à 20 degrés Celsius est d'au moins 50, de préférence d'au moins 75, encore mieux d'au moins 100 et bien mieux encore d'au moins 150.

16. Confiserie aérée glacée selon l'une quelconque des revendications 13 à 15, dans laquelle la confiserie est une crème glacée.

17. Confiserie aérée glacée selon l'une quelconque des revendications 13 à 16, dans laquelle le dépassement est de 15 à 300 % en volume, de préférence de 20 à 250 % en volume et encore mieux de 25 à 200 % en volume.

18. Confiserie aérée glacée selon l'une quelconque des revendications 13 à 17, dans laquelle la longueur moyenne en nombre des cristaux de glace est d'au plus 90, est de préférence d'au plus 80, est encore mieux d'au plus 70 et est bien mieux encore de 10 à 70 micromètres.

## REFERENCES CITED IN THE DESCRIPTION

**Patent documents cited in the description**

- EP 1584241 A1

**Non-patent literature cited in the description**

- **ROMANCHIK.** *Sensory evaluation ratings and melting characteristics show that okra gum is an acceptable milk-fat ingredient substitute in chocolate frozen dairy dessert,* 2006, vol. 106, 594-597
- **C. CLARKE.** The Science of Ice Cream. *RSC Paperbacks,* 2004
- **D. M. JONES ; K. WALTERS ; P.R. WILLIAMS.** On the extensional viscosity of mobile polymer solutions. *Rheologica Acta,* 1987, vol. 26, 20-30
- **ROMANCHIK.** *Sensory evaluation ratings and melting characteristics show that okra gum is an acceptable milk-fat ingredient substitute in chocolate frozen dairy dessert,* 2006, vol. 106, 595